# EUROPEAN PATENT APPLICATION

(11) **EP 4 601 047 A1**
(43) Date of publication of application: **13.08.2025**
(21) Application number: 24826946.6
(22) Date of filing: 09.10.2024
(51) Int. Cl.: H01M 4/62, C01G 53/00, H01M 4/505, H01M 4/525, H01M 4/485, H01M 4/131, H01M 10/054

(54) **SODIUM ION LAYERED METAL OXIDE MATERIAL AND PREPARATION METHOD THEREFOR, POSITIVE ELECTRODE MATERIAL, AND SODIUM ION BATTERY**

(30) Priority: 22.12.2023 CN 202311784522
(71) Applicant: Hubei Wanrun New Energy Technology Co., Ltd., Shiyan, Hubei 442500 (CN)
(72) Inventor: PENG, Tangping, Shiyan, Hubei 442500 (CN); LV, Fei, Shiyan, Hubei 442500 (CN); SHI, Zhixiang, Shiyan, Hubei 442500 (CN); ZHANG, Yuhao, Shiyan, Hubei 442500 (CN); LIU, Shiqi, Shiyan, Hubei 442500 (CN)
(74) Representative: Studio Torta S.p.A.
(86) International application number: PCT/CN2024/123720
(87) International publication number: WO 2025/130266

(57) **Abstract**

The present disclosure belongs to the technical field of Na-lon Batteries. Provided are a Na-ion layered metal oxide material and a preparation method thereof, and a cathode material and a Na-lon Battery. The Na-ion layered metal oxide material has a chemical formula being NaₓNiₐMn_{b}Ti_{(0.5-b)}M_{(0.5-a)}O_{(2-y)}F_{y} (formula I), wherein 0.9≤x≤1.0, 0.3≤a<0.5, 0.3≤b≤0.4, 0.1≤1-a-b≤0.35, and 0≤y<0.1, and M includes at least one of Zn, Mg, Sn, Sb, Y, or Cu. Through the doping of F element and M element, the structural stability of the material is improved. In addition, according to the preparation method of the present disclosure, generation of impure phases can be reduced, and distribution of M element in a finished product is more uniform, such that a cathode plate and NIB containing the Na-ion layered metal oxide material have a high discharging specific capacity and cycling performance.

## Description

### Technical Field

The present disclosure belongs to the technical field of Na-lon Batteries (NIBs), and in particular, to a Na-ion layered metal oxide material and a preparation method thereof, and a cathode material and a Na-lon Battery.

### Background

The commercialization of electrochemical power sources, particularly Lithium-Ion Batteries (LIBs), has started in a new era of portable electronic products and electric vehicles, greatly facilitating daily life. However, driven by concerns about lithium resource depletion and volatile prices of lithium, nickel, and cobalt raw materials, Na-lon Batteriess (NIBs) have been intensively researched and have become a strong contender in energy storage fields such as the national grid, home energy storage, etc. Cathodes are integral parts of the NIBs and directly determine all the key properties of the NIBs, such as cost, safety, energy density, power density, and cycle life. In addition, an ideal cathode material should be friendly to environment, and easy to achieve large-scale production, transportation, and storage.

Cost is a core element driving the competition between the NIBs and the LIBs. Manganese has the advantages of environmental friendliness, low price, and high annual production. A manganese-rich layered Na-ion transition metal oxide material (manganese-based NaₓTMO₂) has numerous elements with electrochemical redox activity, such as Mn, Fe, Cu, Ni, Co, Cr, Ir, Ru, O, and the like, and chemical compositions may be flexibly designed. Furthermore, the manganese-rich layered Na-ion transition metal oxide material is high in specific capacity and good in safety performance, and is a strong contender for the cathode materials of commercialized NIBs.

At present, a general formula of the Na-ion layered transition metal oxide material is NaₓTMO₂. Different structures are formed with the changing of a Na⁺ content, and common structures include O3, P3, O'3, and P2 phases. A transition metal position in a layered oxide may be occupied by various metal ions (e.g., Li, Na, Mg, Ti, V, Cr, Mn, Fe, Co, Ni, Cu, Zn, Sn, Ir, Ru, etc.). The arrangement of extranuclear electrons, oxidation states, and TM-O bond energies of these metal ions vary considerably, and as the Na⁺ content varies, the layered oxide cathode materials with different structures are formed. The specific capacity of a O3-type high-nickel material is high, but when being charged to a high voltage, multiphase transitions are induced, resulting in large volume deformations, and electrolyte decomposition is promoted to induce the co-embedding of solvent molecules, finally leading to serious structural deterioration and capacity fading of an electrode material during charging and discharging.

### Summary

In view of the technical problems in BACKGROUND, the present disclosure provides a Na-ion layered metal oxide material and a preparation method thereof, and a cathode material and a NIB, so as to solve the technical problem of serious structural deterioration and capacity fading of a cathode material during charging and discharging.

In a first aspect, the present disclosure provides a Na-ion layered metal oxide material, having a chemical formula shown in a formula I:

NaₓNiₐMn_{b}Ti_{(0.5-b)}M_{(0.5-a)}O_{(2-y)}F_{y} Formula I.

0.9≤x≤1.0, 0.3≤a<0.5, 0.3≤b≤0.4, 0.1≤1-a-b≤0.35, and 0≤y<0.1, and M includes at least one of Zn, Mg, Sn, Sb, Y, or Cu.

In the embodiments of the present disclosure, the M is conductive to improving the stability of the Na-ion layered metal oxide material. F⁻ radius and O²⁻ radius are similar, such that the replacing of O with F is feasible. By controlling a doping amount of the F, excessive impurities in the Na-ion layered metal oxide material due to the doping of the F may be avoided. The strong electronegativity of the F can change the binding energy of an oxygen element in a lattice, such that a diffusion rate of Na⁺ is accelerated, and lattice distortion caused by a Jahn-Teller effect of active ions such as Mn³⁺ is inhibited, thereby improving the stability of a structure of the Na-ion layered metal oxide material.

In some embodiments, the Na-ion layered metal oxide material is a O3-type manganese-based layered metal oxide material.

In a second aspect, the present disclosure provides a method for preparing the Na-ion layered metal oxide material described above including the following steps, .
A) A Na source, a Ni source, a Mn source, a Ti source, an M source, and a F source are mixed with a solvent according to a stoichiometric ratio in the formula I, and then coarse grinding is performed to obtain a first slurry.
B) The first slurry is ground to obtain a second slurry.
C) Spray-drying is performed on the second slurry to obtain a first powder.
D) The first powder is calcined according to following procedures to obtain a second powder, the following procedures including:
   Under an oxygen-containing atmosphere, a temperature is raised from room temperature to 110°C -130 °C at a heating rate of 3°C/min -5 °C/min, the temperature is held for 2 hours -4 hours, then the temperature is raised to 440 °C -460 °C at a heating rate of 5°C/min -8 °C/min, the temperature is held for 1 hour -3 hours, then the temperature is raised to 850 °C -950 °C at a heating rate of 5°C/min -8 °C/min, and the temperature is held for 10 hours -20 hours.
E) Crushing, sieving, and iron removal are performed on the second powder to obtain the Na-ion layered metal oxide material having the chemical formula I.

   NaₓNiₐMn_{b}Ti_{(0.5-b)}M_{(0.5-a)}O_{(2-y)}F_{y} Formula I.

   0.9≤x≤1.0, 0.3≤a<0.5, 0.3≤b≤0.4, 0.1≤1-a-b≤0.35, and 0≤y<0.1, and M includes at least one of Zn, Mg, Sn, Sb, Y, or Cu.

In the embodiments of the present disclosure, the second powder is calcined by using specific procedures for temperature holding, such that the occurrence of side reactions can be reduced, the generation of impure phases is reduced, and the distribution of copper in the Na-ion layered metal oxide material is more uniform, thereby improving the uniformity of the Na-ion layered metal oxide material and the stability of the Na-ion layered metal oxide material, and further improving electrochemical performance.

In some embodiments, the Na-ion layered metal oxide material is one or more of Na_{0.95}Ni_{0.45}Mn_{0.3}Cu_{0.05}Ti_{0.2}O_{1.95}F_{0.05}, NaNi_{0.48}Mn_{0.4}Y_{0.02}Ti_{0.1}O_{1.999} F_{0.001}, and Na_{0.9}Ni_{0.48}Mn_{0.39}Cu_{0.02}Mg_{0.01}Ti_{0.1}O₂.

In some embodiments, a calcination procedure specifically includes the following.

Under an oxygen-containing atmosphere, a temperature is raised from room temperature to 120°C -125 °C at a heating rate of 4°C/min -5 °C/min, the temperature is held for 2 hours -3 hours, then the temperature is raised to 450°C -455 °C at a heating rate of 5°C/min -7 °C/min, the temperature is held for 1 hour -2 hours, then the temperature is raised to 850°C -950 °C at a heating rate of 5°C/min -8 °C/min, and the temperature is held for 13 hours -20 hours.

In some embodiments, the solvent used for coarse grinding in step A) is water and/or alcohol, and a solid content of the first slurry is 10%-40%, such that the blocking of a rough mill, a sand mill, and a connection pipeline is avoided while yields are guaranteed; and a particle size of the first slurry is D100<10 µm, thereby avoiding a blocking of a filter screen of the sand mill by particles in the first slurry.

In some embodiments, a particle size of the second slurry is D50<3 µm and D100<8 µm, so as to ensure that the particle size distribution of the first powder obtained after spray-drying is more concentrated, thereby avoiding large particles. Because of the uniformity and small particle size of the second slurry, and full contact between insoluble particles, the uniformity of positive ion distribution in the Na-ion layered metal oxide material is guaranteed.

In the embodiments of the present disclosure, grinding after coarse grinding can ensure that each insoluble particle in the slurry is fully ground, so as to guarantee the uniformity of the slurry, and improve grinding efficiency.

In some embodiments, the particle size of the first powder is 2 µm<D50<15 µm and D100<40 µm, and moisture is lower than 1.5%, BET>15 m²/g.

In the embodiments of the present disclosure, the first powder meets the above indicators, it can ensure that water vapor generated during the calcining of the first powder is less, sodium precipitation is avoided, and the small particle size and large BET of the first powder ensure that the contact between the particles during calcining is more sufficient, facilitating ion exchange and migration, such that the crystallinity of the sintered material is higher, positive ion distribution is more uniform, and impurities are less.

In some embodiments, in a calcination process, an oxygen content is 20%-35%, a moisture content is lower than 3%, and a carbon dioxide concentration is lower than 1%.

In the embodiments of the present disclosure, moisture, oxygen contents, and carbon dioxide contents in a high temperature furnace are detected on line during calcining, and the amount of a gas introduced, a removal amount, and a ratio of oxygen to nitrogen in the introduced gas are adjusted in time. By controlling the moisture, oxygen contents, and carbon dioxide contents in the high temperature furnace within a controllable range, excessive impure phases formed during calcining caused by excessive oxygen content can be avoided.

In some embodiments, rapid cooling is performed after calcination ends, so as to obtain the second powder; and rapid cooling is quenching treatment.

In the embodiments of the present disclosure, the acceleration of a cooling rate during the cooling process after calcination is conductive to forming a metastable phase with more Mn³⁺ and higher interlayer sodium content, thereby increasing the reversible capacity of the electrode material.

In a third aspect, the present disclosure provides a cathode plate, including the Na-ion layered metal oxide material described above or a Na-ion layered metal oxide material prepared by the preparation method described above.

In the embodiments of the present disclosure, the cathode plate contains the Na-ion layered metal oxide material, and thus has good structural stability, a high discharging specific capacity, and high capacity retention.

In a fourth aspect, the present disclosure provides a NIB, including the cathode plate.

In the embodiments of the present disclosure, the NIB contains the cathode plate, and thus has a high discharging specific capacity and high cycling performance.

### Brief Description of the Drawings

In order to more clearly illustrate the embodiments of the present disclosure or the technical solutions in the prior art, the drawings used in the description of the embodiments or the prior art will be briefly described below. It is apparent that the drawings in the following descriptions are merely the embodiments of the present disclosure. Other drawings can be obtained from those skilled in the art according to the provided drawings without any creative work.
Fig. 1 is a Scanning Electron Microscope (SEM) diagram of a Na-ion layered metal oxide material according to Embodiment 1 of the present disclosure.
Fig. 2 is an XRD diagram of a Na-ion layered metal oxide material according to Embodiment 1 of the present disclosure.
Fig. 3 is a charging and discharging curve of a button battery according to Embodiment 1 of the present disclosure.
Fig. 4 is a charging and discharging curve of a button battery according to Embodiment 2 of the present disclosure.
Fig. 5 is an SEM diagram of a Na-ion layered metal oxide material according to Embodiment 2 of the present disclosure.
Fig. 6 is a charging and discharging curve of a button battery according to Embodiment 3 of the present disclosure.
Fig. 7 is an SEM diagram of a Na-ion layered metal oxide material according to Embodiment 3 of the present disclosure.

### Detailed Description of the Embodiments

The embodiments of the technical solutions of the present application will be described in detail below in conjunction with the accompanying drawings. The following embodiments are only intended to provide a clearer explanation of the technical solutions of the present application, and therefore they are only used as examples and rather than as limitations to the scope of protection of the present application.

Unless otherwise defined, all technical and scientific terms as used herein have the same meanings as those commonly understood by those skilled in the technical field of the present application; the terms as used herein are only intended for the purpose of describing specific embodiments rather than limiting the present application; and the terms "including" and "having" in the description and claims, as well as the accompanying drawings of the present application, and any variations thereof, are intended to cover non-exclusive inclusion.

In the description of embodiments of the present application, the technical terms "first" and "second", etc., are only used to distinguish different objects and cannot be understood as indicating or implying relative importance or implicitly indicating the number, specific order or primary and secondary relationships of the indicated technical features. In the description of embodiments of the present application, "multiple" means more than or equal to two, unless otherwise specifically defined explicitly.

Reference to "embodiments" herein means that specific features, structures, or characteristics described in combination with embodiments may be included in at least one embodiment of the present application. The phrase appearing at various positions in the specification does not necessarily refer to the same embodiment, nor is it an independent or alternative embodiment mutually exclusive with other embodiments. Those skilled in the art will explicitly and implicitly understand that the embodiments described herein can be combined with other embodiments.

In the description of the embodiments of the present application, the term "and/or" is only used to describe an association relationship describing the associated objects, indicating that there can be three kinds of relationships, for example "A" and/or "B" may indicate three cases: existence of "A" alone, coexistence of "A" and "B", and existence of "B" alone. In addition, the character "/" as used herein generally indicates an "or" relationship between the front and back associated objects.

In the description of the embodiments of the present application, the term "multiple" refers to more than two (including two), similarly, "multiple groups" refers to more than two groups (including two groups), and "multiple pieces" refers to more than two pieces (including two pieces).

In the description of the embodiments of the present application, the orientation and position relationships indicated by the technical terms "center", "lengthwise", "crosswise", "length", "width", "thickness", "up", "down", "front", "back", "left", "right", "vertical", "horizontal", "top", "bottom", "inside", "outside", "clockwise", "counterclockwise", "axial", "radial" and "circumferential", etc., are based on the orientation or position relationship as shown in the accompanying drawings, it is only for the convenience of describing the embodiments of the present application and simplifying the description, rather than indicating or implying that the device or element referred to thereby must have a specific orientation and be constructed and operated in a specific orientation, and thus it cannot be understood as limitations on the embodiments of the present application.

In the description of the embodiments of the present application, unless otherwise specified and limited, the terms "installation", "interconnection", "connection", "fixation", and the like should be understood in a broad sense, for example, it can be either fixed connection, or detachable connection, or integrated connection; it can be either mechanical connection or electrical connection; and it can be either direct connection, or indirect connection through intermediate media, or it can be the internal communication between two components or the interaction between two components. For those of ordinary skill in the art, the specific meanings of the above terms in the embodiments of the present application can be understood according to the specific situations.

At present, in structures of a Na-ion layered transition metal oxide cathode material, the specific capacity of a O3-type high-nickel material is high, but when being charged to a high voltage, multiphase transitions are induced, resulting in large volume deformations, and electrolyte decomposition is promoted to induce the co-embedding of solvent molecules, finally leading to serious structural deterioration and capacity fading of an electrode material during charging and discharging.

In order to solve the above technical problems, the present disclosure provides a Na-ion layered metal oxide material and a preparation method thereof, and a cathode plate and a NIB. By doping an F element and an M element, the structural stability of the Na-ion layered metal oxide material is improved, and the strong electronegativity of the F can change the binding energy of an oxygen element in a lattice, such that a diffusion rate of Na⁺ is accelerated, and lattice distortion caused by a Jahn-Teller effect of active ions such as Mn³⁺ is inhibited, thereby improving the stability of a structure of the Na-ion layered metal oxide material. Furthermore, in the present disclosure, the second powder is calcined by using specific procedures for temperature holding, such that the occurrence of side reactions can be reduced, the generation of impure phases is reduced, and the distribution of copper in the Na-ion layered metal oxide material is more uniform, thereby improving the uniformity of the material and the stability of the product, and further improving electrochemical performance. Therefore, a cathode plate and NIB using the Na-ion layered metal oxide material have a high discharging specific capacity and high cycling performance.

In a first aspect, the present disclosure provides a Na-ion layered metal oxide material, which is an O3-type manganese-based layered metal oxide material and has a chemical formula shown in a formula I.

NaₓNiₐMn_{b}Ti_{(0.5-b)}M_{(0.5-a)}O_{(2-y)}F_{y} Formula I.

0.9≤x≤1.0, 0.3≤a<0.5, 0.3≤b≤0.4, 0.1≤1-a-b≤0.35, and 0≤y<0.1, and M includes at least one of Zn, Mg, Sn, Sb, Y, or Cu.

In one embodiment of the present disclosure, 0.9≤x≤1.0, preferably 0.92≤x≤0.98, for example, the x is 0.9, 0.91, 0.92, 0.93, 0.94, 0.95, 0.96, 0.97, 0.98, 0.99, or 1.0, preferably a range value using any of the above numerical values as an upper limit or a lower limit.

In one embodiment of the present disclosure, 0.3≤a<0.5, preferably 0.35≤a≤0.45, for example, the a is 0.3, 0.31, 0.32, 0.33, 0.34, 0.35, 0.36, 0.37, 0.38, 0.39, 0.4, 0.41, 0.42, 0.43, 0.44, 0.45, 0.46, 0.47, 0.48, or 0.49, preferably a range value using any of the above numerical values as an upper limit or a lower limit.

In one embodiment of the present disclosure, 0<(0.5-a)≤0.2, preferably 0.01≤(0.5-a)≤0.05. Because of poor compatibility of M element with oxide of Ni, Mn, Ti or the like element, within the range, a high proportion of the M element can be avoided, and more impure phases in the Na-ion layered metal oxide material, resulting in an excessively low energy density of the material, all of which avoid occurrence.

In one embodiment of the present disclosure, 0.3≤b≤0.4, preferably 0.32≤b≤0.38, for example, the b is 0.3, 0.31, 0.32, 0.33, 0.34, 0.35, 0.36, 0.37, 0.38, 0.39, or 0.4, preferably a range value using any of the above numerical values as an upper limit or a lower limit.

In one embodiment of the present disclosure, 0.1≤1-a-b≤0.35, preferably 0.2≤1-a-b≤0.3.

In one embodiment of the present disclosure, 0≤y<0.1, preferably 0.01≤y≤0.08, for example, the y is 0, 0.01, 0.02, 0.03, 0.04, 0.05, 0.06, 0.07, 0.08, 0.09, preferably a range value using any of the above numerical values as an upper limit or a lower limit. The value of the y is within the above range, such that too low energy density of the material and deteriorated structural stability caused by more impure phases (e.g., nickel oxide) in the finished product due to high proportion of the F can be avoided.

In particular, in the embodiments of the present disclosure, the Na-ion layered metal oxide material is one or more of Na_{0.95}Ni_{0.45}Mn_{0.3}Cu_{0.05}Ti_{0.2}O_{1.95}F_{0.05}, NaNi_{0.48}Mn_{0.4}Y_{0.02}Ti_{0.1}O_{1.999}F_{0.001}, and Na_{0.9}Ni_{0.48}Mn_{0.39}Cu_{0.02}Mg_{0.01}Ti_{0.1}O₂.

In the present disclosure, after the F and M are doped, the capacity retention of the material for 100 cycles at 1C is increased by 10%-15%.

In a second aspect, the present disclosure further provides a method for preparing the Na-ion layered metal oxide material including the following steps.
A) A Na source, a Ni source, a Mn source, a Ti source, an M source, and a F source are mixed with a solvent according to a stoichiometric ratio in the formula I, and then coarse grinding is performed to obtain a first slurry.
B) The first slurry is ground to obtain a second slurry.
C) Spray-drying is performed on the second slurry to obtain a first powder.
D) The first powder is calcined according to following procedures to obtain a second powder, the following procedures including:
   Under an oxygen-containing atmosphere, a temperature is raised from room temperature to 110°C -130 °C at a heating rate of 3°C/min -5 °C/min, the temperature is held for 2 hours -4 hours, then the temperature is raised to 440°C -460 °C at a heating rate of 5°C/min -8 °C/min, the temperature is held for 1 hour-3 hours, then the temperature is raised to 850°C -950 °C at a heating rate of 5°C/min -8 °C/min, and the temperature is held for 10 hours -20 hours.
E) Crushing, sieving, and iron removal are performed on the second powder to obtain the Na-ion layered metal oxide material having the chemical formula I.

   NaₓNiₐMn_{b}Ti_{(0.5-b)}M_{(0.5-a)}O_{(2-y)}F_{y} Formula I.

In one embodiment of the present disclosure, the Na source is preferably one or more of sodium carbonate, sodium bicarbonate, sodium hydroxide, sodium acetate, sodium oxalate, and sodium citrate; the Ni source is preferably one or more of nickel(II) oxide (NiO), nickel(III) oxide (Ni₂O₃), nickel hydroxide [Ni(OH)₂], nickelic hydroxide (Ni(OH)₃), nickel carbonate, and nickel oxalate; the Mn source is preferably one or more of manganese tetroxide, manganese dioxide, manganese sesquioxide, manganese monoxide, manganese carbonate, and manganese oxalate; the Ti source is preferably titanium dioxide and/or metatitanic acid (H₂TiO₃); and the M source is preferably one or more of oxides of the M, hydroxides of the M, carbonates of the M, oxalates of the M, and citrates of the M. When the M is Yttrium (Y), the M source is preferably oxides of the Y; and the F source is preferably sodium fluoride. The Na source, Ni source, Mn source, Ti source, M source, and F source in the present disclosure are all weighed and mixed according to the number of moles of the metal elements in the chemical formula shown in the formula I, which are common technical means in the art, and are not described herein again in the present disclosure.

In one embodiment of the present disclosure, the solvent used for coarse grinding is preferably water and/or alcohol, more preferably deionized water and/or alcohol. The time for coarse grinding is preferably 1 hour-3 hours, more preferably 1 hour-2 hours; and a working frequency for coarse grinding is preferably 10 Hz -50 Hz, more preferably 20 Hz -40 Hz.

In one embodiment of the present disclosure, the solid content of the first slurry obtained after coarse grinding is preferably 10%-40%, more preferably 20%-30%, for example, 10%, 15%, 20%, 25%, 30%, 35%, and 40%, preferably a range value using any of the above numerical values as an upper limit or a lower limit; and the particle size of the first slurry is preferably D100<10 µm, more preferably D100<5 µm.

After the first slurry is obtained, in the present disclosure, the first slurry is cyclically ground using a two-tank alternating system in a sand mill by means of A/B tank circulation, so as to obtain the second slurry.

In one embodiment of the present disclosure, a grinding time is preferably 2 hours -5 hours, more preferably 3 hours -4 hours; a rotary speed of the sand mill is preferably 200 r/min -1500 r/min, more preferably 500 r/min -1000 r/min; and a particle size of the second slurry is preferably D50<3 µm and D100<8 µm, more preferably D50<2 µm and D100<5 µm.

After the second slurry is obtained, in the present disclosure, spray-drying is performed on the second slurry to obtain the first powder.

In one embodiment of the present disclosure, a particle size of the first powder obtained through spray-drying is preferably 2 µm<D50<15 µm, D100<40 µm, moisture is lower than 1.5%, and BET>15 m²/g, more preferably 5 µm<D50<12 µm, D100<30 µm, the moisture is lower than 1.0%, and BET>15 m²/g.

After the first powder is obtained, in the present disclosure, the first powder is calcined, and calcination is preferably performed according to the following procedures.

Under an oxygen-containing atmosphere, a temperature is raised from room temperature to 110-130 °C at a heating rate of 3-5 °C/min, the temperature is held for 2-4 hours, then the temperature is raised to 440-460 °C at a heating rate of 5-8 °C/min, the temperature is held for 1-3 hours, then the temperature is raised to 890°C -910°C at a heating rate of 5-8 °C/min, and the temperature is held for 10-20 hours.

In one embodiment of the present disclosure, the oxygen-containing atmosphere is preferably dry oxygen or dry air, or a mixed gas of the dry oxygen and nitrogen, so as to avoid material deterioration during temperature cooling due to the material coming into contact with water and carbon dioxide. Preferably, the oxygen-containing atmosphere is the mixed gas of the dry oxygen and the nitrogen, where a volume fraction of the oxygen is preferably 25%-35%, more preferably 30%. While an oxygen content in a high temperature furnace is controlled to avoid adverse effects of water and carbon dioxide in the introduced gas to the finished product, facilitating reduction in the content of free sodium in the finished product and the pH of the finished product, thereby avoiding slurry gelation during the manufacturing of batteries caused by excessive free sodium content and pH of the material.

In one embodiment of the present disclosure, at a first stage, the temperature is first raised from room temperature to 110°C -130 °C at the heating rate of 3 °C/min-5 °C/min, and held for 2 hours-4 hours. The purpose of the stage is mainly to reduce the moisture content of the first powder, so as to avoid excessive impure phases of the finished product due to side reactions caused by excessive moisture content in an atmosphere of the high temperature furnace in the subsequent rapid heating process.

In the stage, the heating rate is preferably 3 °C/min -5 °C/min, more preferably 3 °C/min -4 °C/min; a calcination temperature is preferably 110°C -130 °C, more preferably 115°C -125 °C, for example, 110 °C, 115 °C, 120 °C, 125 °C, and 130 °C, preferably a range value using any of the above numerical values as an upper limit or a lower limit; and a temperature-holding time is preferably 2 hours -4 hours, more preferably 2 hours -3 hours.

After calcination of the first stage is completed, the temperature is raised to 440°C -460 °C at the heating rate of 5°C/min -8 °C/min, and is held for 1 hour-3 hours, and then calcination of a second stage is performed. The stage is mainly intended to promote compound decomposition and melting of the M, and improve the compatibility of the M with other elements, so as to cause the distribution of the M in the Na-ion layered metal oxide material to be more uniform, thereby improving the uniformity of the Na-ion layered metal oxide material, and guaranteeing the stability of the Na-ion layered metal oxide material. Otherwise, the distribution of the M is uneven, leading to inconsistent electrical performance of the finished product sampled for testing at different points, resulting in low stability of the product; or the compatibility of the M with other elements is poor, and the content of oxide impurities of the M element in the finished product are high, leading to poor electrical performance.

In one embodiment of the present disclosure, the heating rate for calcining of the second stage is preferably 5 °C/min -8 °C/min, more preferably 6 °C/min -7 °C/min; the calcination temperature is preferably 440°C -460 °C, more preferably 445°C -455 °C, for example, 440 °C, 445 °C, 450 °C, 455 °C, and 460 °C, preferably a range value using any of the above numerical values as an upper limit or a lower limit; and the temperature-holding time is preferably 1 hour-3 hours, more preferably 1 hour -2 hours.

After calcination of the second stage is completed, in the present disclosure, the temperature is raised to 890 °C -910 °C at the heating rate of 5 °C/min -8 °C/min, and is held for 10 hours-20 hours, and then calcination of a third stage is performed. Performing calcination at the temperature and time is conductive to avoiding the formation of excessive impure phases during the calcining process caused by too high or too low temperatures, facilitating improvement of the crystallinity and purity of the finished product, thereby improving charging and discharging specific capacities.

In one embodiment of the present disclosure, the heating rate is preferably 5 °C/min -8 °C/min, more preferably 6 °C/min -7 °C/min; the calcination temperature is preferably 850°C -950 °C, more preferably 860°C -940 °C, for example, 850 °C, 860 °C, 870 °C, 880 °C, 890 °C, 900 °C, 910 °C, 920 °C, 930 °C, 940°C, and 950 °C, preferably a range value using any of the above numerical values as an upper limit or a lower limit; and the temperature-holding time is preferably 10 hours -20 hours, more preferably 15 hours -16 hours.

In the whole calcination process, the moisture content in the high temperature furnace is controlled to be lower than 3%, a carbon dioxide concentration is lower than 1%, and the oxygen content is 20%-50%, so as to avoid the formation of excessive impure phases during the calcining process caused by excessive oxygen content. Moisture, oxygen contents, and carbon dioxide contents in the high temperature furnace are detected on line during calcining, and the amount of a gas introduced, a gas removal amount, and a ratio of oxygen to carbon dioxide in the introduced gas are adjusted in time. The moisture, oxygen contents, and carbon dioxide contents in the high temperature furnace are controlled within a controllable range.

After calcination is completed, the calcined product is cooled to room temperature, so as to obtain the second powder. Natural cooling may be chosen. In the present disclosure, rapid cooling to room temperature is preferably performed on the calcined product, for example, quenching treatment is used to accelerate a cooling rate, facilitating formation of a metastable phase with more Mn³⁺ and higher interlayer sodium content, thereby increasing the reversible capacity of the electrode material. In the present disclosure, the quenching treatment preferably uses chilled water for cooling or liquid nitrogen for cooling.

After the second powder is obtained, in the present disclosure, crushing, sieving, and iron removal are performed on the second powder, so as to obtain the Na-ion layered metal oxide material. Environment humidity for crushing and sieving is controlled to be lower than 15%, a particle size range of the obtained Na-ion layered metal oxide material is 0.5 µm<D50<12 µm and D100<40 µm, the content of a magnetic foreign body is lower than 150 ppm, the amount of manganese leaching is lower than 0.5 ppm, the amount of free sodium is lower than 100 ppm, and the moisture is lower than 1000 ppm.

In one embodiment of the present disclosure, a crushing manner is preferably jet mill or a mechanical crusher; and the materials at least pass through two-stage screens during sieving, the number of meshes of the first-stage screen is 80-100, and the number of meshes of the second-stage screen is 120-320.

Crushing and sieving can improve the uniformity of the finished product, such that adverse effects on the electrical performance by the large particles in the finished product are avoided. By controlling the environment humidity for crushing and sieving to be lower than 15%, the generation of impurities and reduction of the electrical performance due to material deterioration caused by sample water absorption are avoided.

In one embodiment of the present disclosure, the processes of performing crushing, sieving, and iron removal on the second powder is a continuous operation with intermediate through pipe connection, conveying is performed using a negative pressure, the finished product enters a crusher after being subjected to degassing treatment, dry nitrogen is introduced for protection during crushing, sieving, and iron removal processes, so as to prevent the material from coming into contact with water and carbon dioxide to generate impurities.

In a third aspect, the present disclosure provides a cathode plate, including the above Na-ion layered metal oxide material. In the present disclosure, other materials such as a current collector, a conducting agent, an adhesive, etc. used by the cathode plate are not specifically limited, and may use conventional preparation raw materials for the cathode plate commonly used in the art.

In a third aspect, the present disclosure provides a NIB, including the above cathode plate. In the present disclosure, other materials such as a anode, a diaphragm, etc. used by the NIB are not specifically limited, and may use conventional preparation raw materials for the NIB commonly used in the art.

Some specific embodiments are listed below. It should be noted that the embodiments described below are exemplary and are only intended to explain the present application, which cannot be understood as limitations to the present application. If no specific technology or conditions are indicated in the examples, the technology or conditions described in the literature in the art or the product specification shall be followed. The reagents or instruments used of which the manufacturers are not indicated are conventional products that are commercially available.

### Embodiment 1

A chemical formula of a Na-ion layered metal oxide material is Na_{0.95}Ni_{0.45}Mn_{0.3}Cu_{0.05} Ti_{0.2}O_{1.95}F_{0.05}.

According to a molar ratio of metal elements in the chemical formula of the material, sodium carbonate, nickel oxide, manganese tetroxide, titanium oxide, copper oxide, sodium fluoride, and deionized water were put into a rough mill for uniform mixing, a mixing time was 2 h, and a working frequency was 30 Hz, so as to obtain a first slurry (a solid content being 25%, and a particle size being D100<8.5 µm).

The first slurry was ground and mixed in an inverted tank manner in a sand mill by means of A/B tank circulation, a grinding time was 3 h, and a rotary speed of the sand mill was 1000 r/min, so as to obtain a second slurry (a particle size being D50<3 µm and D100<8 µm).

Spray-drying was performed on the second slurry to obtain a first powder (a particle size being D50<10 µm, D100<35 µm, moisture being 0.5%, and BET being 30 m²/g).

The first powder was placed in a high temperature furnace for calcination; a calcination temperature curve was that a temperature was heated from room temperature to 120 °C at 5 °C/min and held for 2 h, then heated to 450 °C at 5 °C/min and held for 2 h, and then heated to 900 °C at 5 °C/min and held for 13 h; an atmosphere in the high temperature furnace was a mixed gas of dry oxygen and nitrogen (an oxygen ratio being 25%); and then chilled water was used to rapidly cool the calcined powder to room temperature, so as to obtain a second powder.

120 °C was held for 2 h in this calcining process, which was mainly intended to reduce the moisture content of the first powder, so as to avoid excessive impure phases of a finished product caused by side reactions due to excessive moisture content in the atmosphere in the high temperature furnace in the subsequent rapid heating process; 450 °C was held for 2 h, which was mainly intended to promote copper oxide decomposition and melting, and improve the compatibility of copper with other elements, causing the distribution of the copper in the finished product to be more uniform, thereby improving the uniformity of the material, and guaranteeing the stability of the product. Otherwise, the distribution of the copper was uneven, leading to inconsistent electrical performance of the finished product sampled for testing at different points, resulting in low stability of the product; or the compatibility of the copper with other elements was poor, and copper oxide impurities in the finished product were high, leading to poor electrical performance.

In this calcining process, the moisture content in the high temperature furnace was controlled to be lower than 3%, a carbon dioxide concentration was lower than 1%, and the oxygen content was 20%-35%.

Crushing, sieving, and iron removal were performed on the second powder, so as to obtain the Na-ion layered metal oxide material. Environment humidity for crushing and sieving was controlled to be lower than 15%; a particle size range of the obtained Na-ion layered metal oxide material included D50 being 8.5 µm and D100 being 36 µm; and the content of a magnetic foreign body was lower than 150 ppm, manganese leaching was lower than 0.5 ppm, free sodium was lower than 100 ppm, and the moisture was lower than 1000 ppm.

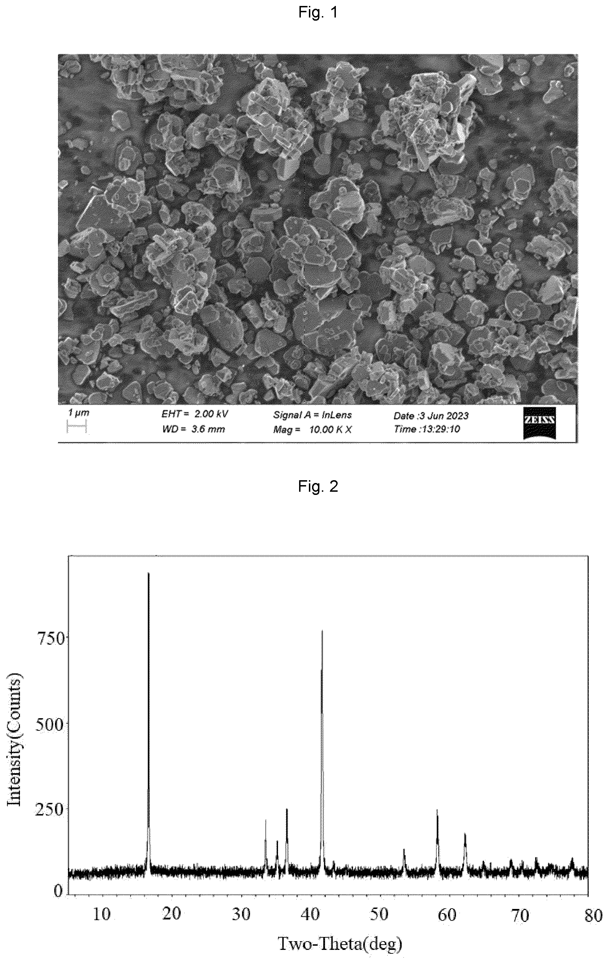

An SEM of the Na-ion layered metal oxide material was shown in Fig. 1. The Na-ion layered metal oxide material showed a typical layered structure, small particles were agglomerated to form large particles, and a primary particle size was 0.7-7 um.

An XRD of the Na-ion layered metal oxide material was shown in Fig. 2.

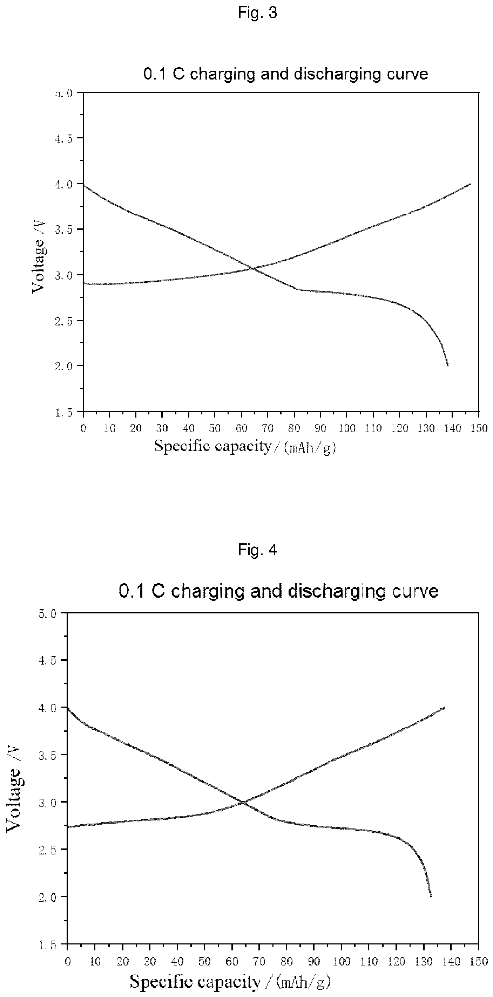

The Na-ion layered metal oxide material was used as a cathode material, so as to prepare a button battery. A charging and discharging curve within an interval of 2-4.0 V was shown in Fig. 3. A discharging specific capacity at 0.1 C was 138 mAh/g. Before Cu and F were doped, the capacity retention of the material for 100 cycles at 1 C was about 80%. After the F and the Cu were doped, compared to non-doping, the discharging specific capacity at 0.1 C was basically unchanged, but the capacity retention of the material for 100 cycles at 1 C was 91.2%, which was increased by about 11%; and about 5% was increased compared to the capacity retention of the material only doped with the Cu for 100 cycles at 1 C being 85.3%. The introduction of the M was also conductive to improving the environment stability of a layered metal oxide. Compared to a material not doped with the M, placement was performed for the same time under the same air atmosphere, and the discharging specific capacity of the material doped with the M was increased by 5%-10%.

### Comparative example 1

A Na-ion layered metal oxide material was prepared according to the method in Embodiment 1, and a button battery was assembled. A difference between this comparative example and Embodiment 1 lied in that, a chemical formula of the Na-ion layered metal oxide material was Na_{0.95}Ni_{0.5}Mn_{0.3}Ti_{0.2}O₂.

The button battery was prepared according to the method in Embodiment 1, and an electrochemical performance test was performed. Results showed that, a discharging specific capacity at 0.1 C was 135.5 mAh/g, and the capacity retention of the material for 100 cycles at 1 C was about 80%.

### Comparative example 2

A Na-ion layered metal oxide material was prepared according to the method in Embodiment 1, and a button battery was assembled. A difference between this comparative example and Embodiment 1 lied in that, a chemical formula of the Na-ion layered metal oxide material was Na_{0.95}Ni_{0.45}Mn_{0.3}Cu_{0.05}Ti_{0.2}O₂.

The button battery was prepared according to the method in Embodiment 1, and an electrochemical performance test was performed. Results showed that, a discharging specific capacity at 0.1 C was 137 mAh/g, and the capacity retention of the material for 100 cycles at 1 C was about 85.3%.

### Comparative example 3

A Na-ion layered metal oxide material was prepared according to the method in Embodiment 1, and a button battery was assembled. A difference between this comparative example and Embodiment 1 lied in that, a chemical formula of the Na-ion layered metal oxide material was Na_{0.95}Ni_{0.5}Mn_{0.3}Ti_{0.2}O_{1.95}F_{0.05}.

The button battery was prepared according to the method in Embodiment 1, and an electrochemical performance test was performed. Results showed that, a discharging specific capacity at 0.1 C was 136 mAh/g, and the capacity retention of the material for 100 cycles at 1 C was about 82.4%.

### Comparative example 4

A Na-ion layered metal oxide material was prepared according to the method in Embodiment 1, and a button battery was assembled. Differences between this comparative example and Embodiment 1 lied in that, a temperature was directly heated to 450 °C at 5 °C/min without a heating process of a first stage, held for 3 h, heated to 900 °C at 5 °C/min, and held for 13 h.

The button battery was prepared according to the method in Embodiment 1, and an electrochemical performance test was performed. Results showed that, a discharging specific capacity within a charging and discharging interval of 2-4.0 V was 125 mAh/g.

### Comparative example 5

A Na-ion layered metal oxide material was prepared according to the method in Embodiment 1, and a button battery was assembled. Differences between this comparative example and Embodiment 1 lied in that, a temperature was directly heated to 900 °C at 5 °C/min without a heating process of a first stage, and held for 13 h, and a discharging specific capacity within a charging and discharging interval of 2-4.0 V was 121 mAh/g.

### Embodiment 2

A chemical formula of a Na-ion layered metal oxide material is NaNi_{0.48}Mn_{0.4}Y_{0.02}Ti_{0.1}O_{1.999}F_{0.001}.

According to a molar ratio of metal elements in the chemical formula of the material, sodium bicarbonate, nickel oxide, manganese tetroxide, titanium oxide, sodium fluoride, yttrium oxide, and certain amount of deionized water were put into a rough mill for uniform mixing, a mixing time was 2 h, and a working frequency was 30 Hz, so as to obtain a first slurry (a solid content being 30%, and a particle size being D100<7 µm).

The first slurry was ground and mixed in an inverted tank manner in a sand mill by means of A/B tank circulation, a grinding time was 3 h, and a rotary speed of the sand mill was 1000 r/min, so as to obtain a second slurry (a particle size being D50<2 µm and D100<7 µm).

Spray-drying was performed on the second slurry to obtain a first powder (a particle size being 3 µm<D50<10 µm, D100<30 µm, moisture being 1%, and BET being 30 m²/g).

The first powder was placed in a high temperature furnace for calcination; a calcination temperature curve was that a temperature was heated from room temperature to 120 °C at 4 °C/min and held for 2 h, then heated to 455 °C at 6 °C/min and held for 2 h, and then heated to 850 °C at 7 °C/min and held for 20 h; and then the calcined material was rapidly cooled, and a rapid cooling manner might use liquid nitrogen for cooling or chilled water for cooling.

120 °C was held for 2 h in this calcining process, which was mainly intended to reduce the moisture content of the first powder, so as to avoid excessive impure phases of a finished product caused by side reactions due to excessive moisture content in the atmosphere in the high temperature furnace in the subsequent rapid heating process; and the highest calcining temperature being 850 °C might improve the compatibility of Y with other elements, causing the distribution of the Y in the finished product to be more uniform, thereby improving the uniformity of the material, and guaranteeing the stability of the product. Otherwise, the distribution of the Y was uneven, leading to inconsistent electrical performance of the finished product sampled for testing at different points, resulting in poor consistency of a final product. In addition, the calcining temperature being 850 °C might avoid reduction in the electrical performance due to oversized primary particles of the finished product.

In this calcining process, the moisture content in the high temperature furnace was controlled to be lower than 2%, a carbon dioxide concentration was lower than 1%, and the oxygen content was 20%-50%.

Crushing, sieving, and iron removal were performed on the second powder, so as to obtain the Na-ion layered metal oxide material. Environment humidity for crushing and sieving was controlled to be lower than 10%; a particle size range of the obtained Na-ion layered metal oxide material was 2 µm<D50<10 µm, and 25 µm<D100<35 µm; and the content of a magnetic foreign body was lower than 150 ppm, manganese leaching was lower than 0.5 ppm, free sodium was lower than 100 ppm, and the moisture was lower than 1000 ppm.

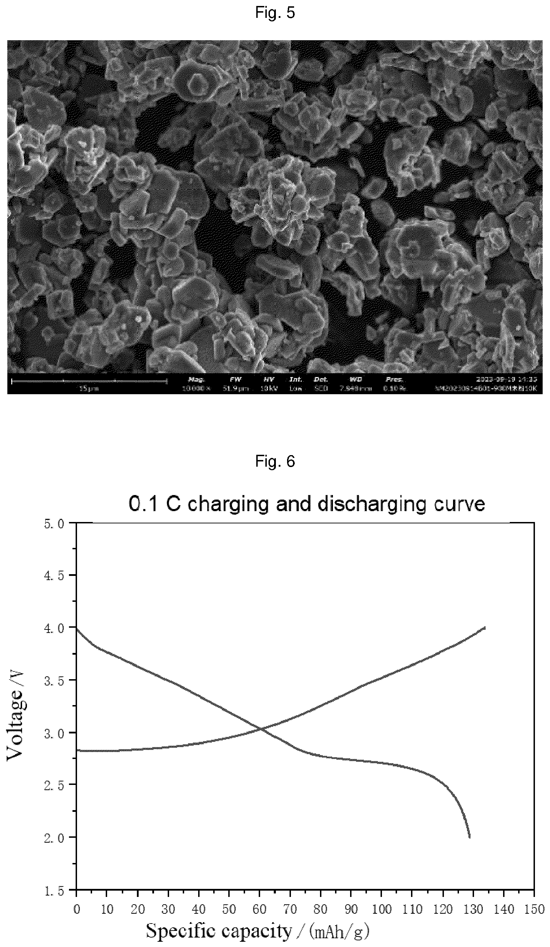

An SEM of the Na-ion layered metal oxide material was shown in Fig. 5. The Na-ion layered metal oxide material showed a typical layered structure, small particles were agglomerated to form large particles, and a primary particle size was 0.2-4.5 µm.

The Na-ion layered metal oxide material was used as a cathode material, so as to prepare a button battery. A charging and discharging curve within an interval of 2-4.0 V was shown in Fig. 4. A discharging specific capacity at 0.1 C was 135 mAh/g, and the capacity retention of the material for 100 cycles at 1 C was about 85.2%. Before the Y and the F were doped (NaNi_{0.5}Mn_{0.4}Ti_{0.1}O₂), the capacity retention of the material for 100 cycles at 1 C was about 80%, and the discharging specific capacity at 0.1 C was 135.5 mAh/g. After the Y and the F were doped, compared to non-doping, the discharging specific capacity at 0.1 C slightly reduced, but the capacity retention of the material for 100 cycles at 1 C was increased by about 5%. After the Y was doped, the layered metal oxide material had a very strong Y-O bond, so as to form a stable structure, and the material was surrounded by a Y₂O₃ protective layer. An expanded Na layer also led to the insertion of Na ions not only into the surface but also into the body. Therefore, the cycling performance of the material after the Y was doped into the material was improved. In addition, the yttrium oxide did not decompose or melt at 850 °C, which was equivalent to introduction of a small number of impure phases. However, the addition of the yttrium oxide added in the product was little, such that negative effects were not generated on the electrical performance.

### Embodiment 3

A chemical formula of a Na-ion layered metal oxide material is Na_{0.9}Ni_{0.48}Mn_{0.39}Cu_{0.02}Mg_{0.01}Ti_{0.1}O₂.

According to a molar ratio of metal elements in the chemical formula of the material, sodium carbonate, nickel hydroxide, manganese dioxide, titanium oxide, and alcohol were put into a rough mill for uniform mixing, a mixing time was 2 h, and a working frequency was 30 Hz, so as to obtain a first slurry (a solid content being 20%, and a particle size being D100<10 µm).

The first slurry was ground and mixed in an inverted tank manner in a sand mill by means of A/B tank circulation, a grinding time was 3 h, and a rotary speed of the sand mill was 1000 r/min, so as to obtain a second slurry (a particle size being D50<3 µm and D100<10 µm).

Spray-drying was performed on the second slurry to obtain a first powder (a particle size being 3 µm<D50<8 µm, D100<35 µm, moisture being 1%, and BET being 30 m²/g).

The first powder was placed in a high temperature furnace for calcination; a calcination temperature curve was that a temperature was heated from room temperature to 120 °C at 4 °C/min and held for 3 h, then heated to 450 °C at 7 °C/min and held for 1 h, and then heated to 950 °C at 8 °C/min and held for 15 h; an atmosphere in the high temperature furnace was dry oxygen; and then the temperature was rapidly cooled to room temperature, so as to obtain a second powder, and a rapid cooling manner might use liquid nitrogen for cooling or chilled water for cooling.

120 °C was held for 3 h in this calcining process, which was mainly intended to reduce the moisture content of the first powder, so as to avoid excessive impure phases of a finished product caused by side reactions due to excessive moisture content in the atmosphere in the high temperature furnace in the subsequent rapid heating process; 450 °C was held for 3 h, which was mainly intended to promote copper oxide decomposition and melting, and improve the compatibility of copper with other elements, causing the distribution of the copper in the finished product to be more uniform, thereby improving the uniformity of the material, and guaranteeing the stability of the product. Otherwise, the distribution of the copper was uneven, leading to inconsistent electrical performance of the finished product sampled for testing at different points, resulting in low stability of the product; or the compatibility of the copper with other elements was poor, and copper oxide impurities in the finished product were high, leading to poor electrical performance.

In this calcining process, the moisture content in the high temperature furnace was controlled to be lower than 2%, and a carbon dioxide concentration was lower than 1%. Moisture and carbon dioxide contents in the high temperature furnace were detected on line during calcining, and the amount of a gas introduced and a removal amount were adjusted in time. The moisture and carbon dioxide contents in the high temperature furnace were controlled within a controllable range.

Crushing, sieving, and iron removal were performed on the second powder, so as to obtain the Na-ion layered metal oxide material. Environment humidity for crushing and sieving was controlled to be lower than 10%; a particle size range of the obtained Na-ion layered metal oxide material was 3 µm<D50<10 µm, and 25 µm<D100<40 µm; and the content of a magnetic foreign body was lower than 150 ppm, manganese leaching was lower than 0.5 ppm, free sodium was lower than 100 ppm, and the moisture was lower than 1000 ppm.

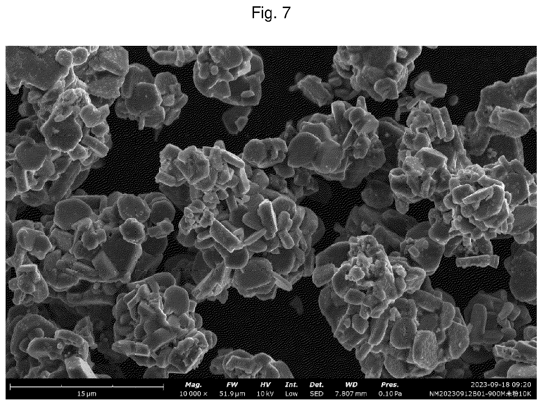

An SEM of the Na-ion layered metal oxide material was shown in Fig. 7. The Na-ion layered metal oxide material showed a typical layered structure, small particles were agglomerated to form large particles, and a primary particle size was 0.5-5 um.

The Na-ion layered metal oxide material with the chemical formula being Na_{o o}Ni_{o.4s}Mn_{g.39}C_{U0.02}Mg_{o.01}Ti_{o.1}O₂ was used as a cathode material, so as to prepare a button battery. A charging and discharging curve within an interval of 2-4.0 V was shown in Fig. 6. A discharging specific capacity at 0.1 C was 129 mAh/g, and the capacity retention of the material for 100 cycles at 1 C was 92.1%. Before the Cu and the Mg were doped (i.e., Na_{0.9}Ni_{0.5}Mn_{0.4}Ti_{0.1}O₂), the capacity retention of the material for 100 cycles at 1 C was about 80%, and the discharging specific capacity at 0.1 C was 135.5 mAh/g. After the Cu and the Mg were doped, compared to non-doping, the discharging specific capacity at 0.1 C reduced, but the capacity retention of the material for 100 cycles at 1 C was increased by about 12%. The Mg was doped on the basis of the doping of the Cu, which was equivalent to replacement of trivalent manganese ions with divalent magnesium ions, interlamellar spacing might be increased to promote the diffusion of sodium ions, and lattice strain caused by detachment and embedding of sodium ions might also be relieved, so as to improve the stability of the layered structure. In addition, the doping of the divalent magnesium ions might relieve structural deformation or volume changes caused by charge-discharge cycles of the NIB, so as to inhibit irreversible phase change, thereby generating an important impact on improving the reversible specific capacity of the material. Furthermore, the Mg in the material showed non-electrochemical activity and did not participate in a redox reaction. However, the addition of magnesium oxide added in the product was little, such that negative effects were not generated on the electrical performance.

The above description is merely preferred implementations of the present disclosure, and it should be noted that persons of ordinary skill in the art may also make several improvements and refinements without departing from the principle of the present disclosure, and it should be considered that these improvements and refinements shall all fall within the protection scope of the present disclosure.

## Claims

1. A Na-ion layered metal oxide material, being a O3-type manganese-based layered oxide material, wherein the Na-ion layered metal oxide material is one or more of Na_{0.95}Ni_{0.45}Mn_{0.3}Cu_{0.05}Ti_{0.2}O_{1.95}F_{0.05}, NaNi_{0.48}Mn_{0.4}Y_{0.02}Ti_{0.1}O_{1.999} F_{0.001}, and Na_{0.9}Ni_{0.48}Mn_{0.39}Cu_{0.02}Mg_{0.01}Ti₀₁O₂; and
a method for preparing the Na-ion layered metal oxide material comprises the following steps:
A) mixing a Na source, a Ni source, a Mn source, a Ti source, an M source, and a F source with a solvent according to a stoichiometric ratio in the formula I, and then performing coarse grinding to obtain a first slurry;
B) grinding the first slurry to obtain a second slurry;
C) performing spray-drying on the second slurry to obtain a first powder;
D) calcining the first powder according to following procedures, so as to obtain a second powder, the following procedures including:
under an oxygen-containing atmosphere, raising a temperature from room temperature to 110 °C-130 °C at a heating rate of 3°C/min -5 °C/min, holding the temperature for 2 hours -4 hours, then raising the temperature to 440 °C -460 °C at a heating rate of 5°C/min -8 °C/min, holding the temperature for 1 hour -3 hours, then raising the temperature to 850 °C -950 °C at a heating rate of 5°C/min -8 °C/min, and holding the temperature for 10 hours -20 hours; and,
E) performing crushing, sieving, and iron removal on the second powder to obtain the Na-ion layered metal oxide material having the chemical formula I.

2. A method for preparing the Na-ion layered metal oxide material according to claim 1, comprising the following steps:
A) mixing a Na source, a Ni source, a Mn source, a Ti source, an M source, and a F source with a solvent according to a stoichiometric ratio in the formula I, and then performing coarse grinding to obtain a first slurry;
B) grinding the first slurry to obtain a second slurry;
C) performing spray-drying on the second slurry to obtain a first powder;
D) calcining the first powder according to following procedures, so as to obtain a second powder, the following procedures including:
under an oxygen-containing atmosphere, raising a temperature from room temperature to 110 °C-130 °C at a heating rate of 3°C/min -5 °C/min, holding the temperature for 2 hours -4 hours, then raising the temperature to 440 °C -460 °C at a heating rate of 5°C/min -8 °C/min, holding the temperature for 1 hour -3 hours, then raising the temperature to 850 °C -950 °C at a heating rate of 5°C/min -8 °C/min, and holding the temperature for 10 hours -20 hours;
and,
E) performing crushing, sieving, and iron removal on the second powder to obtain the Na-ion layered metal oxide material.

3. The preparation method according to claim 2, wherein the solvent used for coarse grinding in the step A) is water and/or alcohol, a solid content of the first slurry is 10-40%, and a particle size of the first slurry is D100<10 µm.

4. The preparation method according to claim 2, wherein a calcination procedure specifically comprises:
under an oxygen-containing atmosphere, raising a temperature from room temperature to 120°C -125 °C at a heating rate of 4 °C/min -5 °C/min, holding the temperature for 2 hours -3 hours, then raising the temperature to 450 °C -455 °C at the heating rate of 5 °C/min -7 °C/min, holding the temperature for 1 hour -2 hours, then raising the temperature to 850°C -950 °C at the heating rate of 5°C/min -8 °C/min, and holding the temperature for 13 hours -20 hours.

5. The preparation method according to claim 2, wherein in a calcination process, an oxygen content is 20%-35%, a moisture content is lower than 3%, and a carbon dioxide concentration is lower than 1%.

6. The preparation method according to claim 2, wherein rapid cooling is performed after calcination ends, so as to obtain the second powder; and
the rapid cooling is quenching treatment.

7. A cathode plate, comprising the Na-ion layered metal oxide material according to claim 1 or a Na-ion layered metal oxide material prepared by the preparation method according to any one of claims 2 to 6.

8. A Na-lon Battery, comprising the cathode plate according to claim 7.
